(19) Europäisches Patentamt
European Patent Office
Office européen des brevets

(11) EP 2 145 892 B1

(12) EUROPÄISCHE PATENTSCHRIFT

(45) Veröffentlichungstag und Bekanntmachung des Hinweises auf die Patenterteilung:
**11.07.2012 Patentblatt 2012/28**

(51) Int Cl.:
***C07F 9/30*** *(2006.01)* ***C08K 5/5313*** *(2006.01)*
***C08K 3/32*** *(2006.01)*

(21) Anmeldenummer: **09012792.9**

(22) Anmeldetag: **03.05.2005**

(54) **Diorganylphosphinsäure-Salze, ein Verfahren zu ihrer Herstellung und ihre Verwendung**

Salts of diorganyl phosphinic acids, method for their manufacture and their application

Sels d'acide de diorganylphosphine, leur procédé de fabrication et d'utilisation

(84) Benannte Vertragsstaaten:
**AT BE CH DE ES FR GB IT LI NL**

(30) Priorität: **11.05.2004 DE 102004023085**

(43) Veröffentlichungstag der Anmeldung:
**20.01.2010 Patentblatt 2010/03**

(62) Dokumentnummer(n) der früheren Anmeldung(en) nach Art. 76 EPÜ:
**05009647.8 / 1 607 400**

(73) Patentinhaber: **Clariant Produkte (Deutschland) GmbH**
**65929 Frankfurt am Main (DE)**

(72) Erfinder:
- **Bauer, Harald, Dr.**
**50170 Kerpen (DE)**
- **Krause, Werner, Dr.**
**50354 Hürth (DE)**
- **Sicken, Martin, Dr.**
**51149 Köln (DE)**
- **Weferling, Norbert, Dr.**
**50354 Hürth (DE)**

(74) Vertreter: **Hütter, Klaus et al**
**Clariant Produkte (Deutschland) GmbH**
**Group Intellectual Property**
**Am Unisys-Park 1**
**65843 Sulzbach (DE)**

(56) Entgegenhaltungen:
**EP-A1- 1 055 676 DE-A1- 19 851 618**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 145 892 B1

**Beschreibung**

Die Erfindung betrifft Diorganylphosphinsäure-Salze, ein Verfahren zu ihrer Herstellung und ihre Verwendung.

Die nach dem bekannten Stand der Technik (US-A-3,197,436; US-A-3,255,125; US-A-3,415,762; DE-A-196 16 025; DE-A-199 10 232; DE-A-198 51 729 und WO-99/28327) hergestellten Diorganylphosphinsäure-Salze oder analoge Verbindungen weisen aufgrund ihrer Zusammensetzung eine nicht ausreichende Verträglichkeit mit den Polymeren, in denen sie eingesetzt werden sollen.

Es bestand somit die Aufgabe, Diorganylphosphinsäure-Salze bereitzustellen, die auf Grund ihrer spezifischen Zusammensetzung eine verbesserte Verträglichkeit mit den Polymeren aufweisen.

Weiterhin bestand die Aufgabe darin Flammschutzmittel-Zusammensetzungen auf Basis der erfindungsgemäßen Diorganylphosphinsäure-Salze zur Verfügung zu stellen, weiterhin flammgeschützte Polymerformmassen basierend auf Diorganylphosphinsäure-Salzen, bzw. Flammschutzmittel-Zusammensetzungen und weiterhin flammgeschützte Polymerformkörper mit verbesserten mechanischen Eigenschaften.

Überraschenderweise wurde nun gefunden, dass der Gehalt an teilweise wasserlöslichen, ionisierbaren Verbindungen maßgeblichen Einfluss auf die Verträglichkeit mit dem Polymer besitzt, bzw. dass ein nicht erfindungsgemäßer Gehalt an teilweise wasserlöslichen, ionisierbaren Verbindungen zu einer mangelnden Verträglichkeit von Diorganylphosphinsäure-Salzen bzw. Flammschutzmittel-Zusammensetzungen und Polymer führen kann.

Erfindungsgemäß wurde die vorgenannte Aufgabe durch Diorganylphosphinsäure-Salze mit einem spezifischen Gehalt an teilweise wasserlöslichen, ionisierbaren Verbindungen gelöst.

Gegenstand der Erfindung sind daher Diorganylphosphinsäure-Salze der Formel (I)

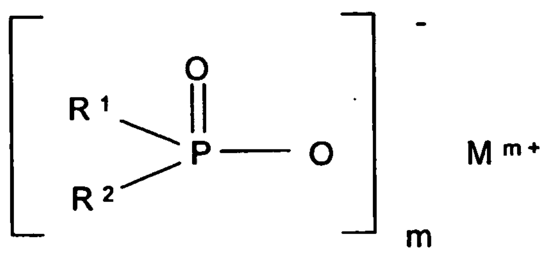

(I)

worin

| | |
|---|---|
| $R^1$, $R^2$ | gleich oder verschieden sind und $C_1$-$C_6$-Alkyl, linear oder verzweigt und/oder Aryl; |
| M | Mg, Ca, Al, Sb, Sn, Ge, Ti, Fe, Zr, Zn, Ce, Bi, Sr, Mn, Li, Na, K und/oder eine protonierte Stickstoffbase; |
| m | 1 bis 4; x 1 bis 4 |

bedeuten, **dadurch gekennzeichnet, dass** der Gesamt-Gehalt an teilweise wasserlöslichen, ionisierbaren Verbindungen und der wasserlösliche Gehalt aus den teilweise wasserlöslichen, ionisierbaren Verbindungen 8.200 bis 100 ppm, und dass es sich bei den teilweise wasserlöslichen, ionisierbaren Verbindungen um solche handelt, die sich von Acetaten, Chloriden, Nitraten, Sulfaten, Phosphiten oder Phosphaten ableiten und dass der Gesamt-Gehalt an Nitrat (teilweise wasserlösliche, ionisierbare Verbindung) 2.100 bis 100 ppm und der Gehalt an wasserlöslichem Nitrat (wasserlöslicher Gehalt aus der teilweise wasserlöslichen, ionisierbaren Verbindung) 1.100 bis 10 ppm beträgt.

Die vorgenannten Verbindungen sind also in jedem Fall ionisierbar und bestehen aus einem wasserlöslichen Anteil (an z. B. Salz, welches aus dem Gesamt-Gehalt der vorgenannten Verbindungen herausgelöst werden kann) und einem nichtwasserlöslichen Anteil (beispielsweise ein Salzanteil, der teilweise zurückbleibt und somit nicht löslich ist).

Bevorzugt sind $R^1$, $R^2$ gleich oder verschieden und bedeuten Methyl, Ethyl, n-Propyl, iso-Propyl, n-Butyl, tert.-Butyl, n-Pentyl und/oder Phenyl.

Bevorzugt handelt es sich bei den Diorganylphosphinsäure-Salzen der Formel (I) um solche aus der Gruppe Aluminiumtrisdiethylphosphinat, Aluminiumtrismethylethylphosphinat, Aluminiumtrisdiphenylphosphinat, Zinkbisdiethylphosphinat, Zinkbismethylethylphosphinat, Zinkbisdiphenylphosphinat, Titanylbisdiethylphosphinat, Titantetrakisdiethylphosphinat, Titanylbismethylethylphosphinat, Titantetrakismethylethylphosphinat, Titanylbisdiphenylphosphinat, Titantetrakisdiphenylphosphinat und beliebige Mischungen davon.

Bevorzugt beträgt die Restfeuchte der erfindungsgemäßen Diorganylphosphinsäure-Salze 0,01 bis 10 Gew.-%, ihre Teilchengröße 0,1 bis 1.000 µm und ihre Schüttdichte 80 bis 800 g/l.

Die Erfindung betrifft auch ein Verfahren zur Herstellung von Diorganylphosphinsäure-Salzen der Formel (I), **dadurch gekennzeichnet, dass** man die Diorganylphosphinsäure

a) mit einer freien Base oder
b) mit dem elementarem Metall des gewünschten Kations oder
c) in ihrer Form als Alkalimetall-Salz mit einem Salz des gewünschten Kations oder
d) in Form eines reaktiven Derivates mit einem Derivat des gewünschten Kations 0,01 bis 1 Stunden bei 0 bis 300 °C umsetzt.

Bevorzugt handelt es sich bei der freien Base um Stickstoffbasen, wie Ammoniak, primären, sekundären, tertiären und quartären Aminen; Melamin, Harnstoff, Biuret, Guanidin, Alkylguanidin, Arylguanidin, Diphenylguanidin, Biguanid, Allantoin, Acetoguanamin, Benzoguanamin, Tolyltriazol, Benzotriazol, 2-Amino-4-methylpyrimidin, Benzylharnstoff, Ethylendimelamin, Acetylenharnstoff, Hydantoin, Malonsäureamidamidin, Dimethylharnstoff, 5,5-Diphenylhydantoin, N,N'-Diphenylharnstoff, Ethylen-bis-5-triazon, Glycinanhydrid, Tetramethylharnstoff, Triethanolamin und/oder Kondensationsprodukte des Melamins z. B. Melem, Melam oder Melon bzw. höher kondensierte Verbindungen dieses Typs.

Bevorzugt handelt es sich bei der freien Base um ein Oxid, gemischtes Metall-Oxid-Hydroxid, Hydroxid, Carbonat, Hydroxidcarbonat und/oder Hydrogencarbonat des gewünschten Kations.

Bevorzugt handelt es sich bei den gewünschten Kationen um Mg, Ca, Al, Sb, Sn, Ge, Ti, Fe, Zr, Zn, Ce, Bi, Sr, Mn, Li, Na und/oder K.

Bevorzugt handelt es sich bei den Salz des gewünschten Kations um Fluoride, Chloride, Bromide, Iodide; Hypohalogenite, Halogenite, Halogenate, Iodat, Perhalogenate, Perchlorat; Oxide, Hydroxide, Peroxide, Superoxide; Sulfate, Hydrogensulfate, Sulfathydrate, Sulfite, Peroxosulfate; Nitride, Phosphide; Nitrat, Nitrathydrate, Nitrite, Phosphate, Peroxophosphate, Phosphite, Hypophosphite, Pyrophosphate; Carbonate, Hydrogencarbonate, Hydroxidcarbonate, Carbonathydrate, Silicate, Hexafluorosilicate, Hexafluorosilicathydrate, Stannate; Borate, Polyborate, Peroxoborate; Thiocyanate, Cyanate, Cyanide; Chromate, Chromite, Molybdate, Permanganat.

Bevorzugt handelt es sich bei den Salz des gewünschten Kations weiterhin um Verbindungen mit organischen Anionen aus der Gruppe der Mono-, Di-, Oligo-, Polycarbonsäuren wie Formiate, Acetate, Acetathydrate, Trifluoracetathydrate, Propionate, Butyrate, Valerate, Caprylate, Oleate, Stearate, Oxalate, Tartrate, Citrate, basische Citrate, Citrathydrate, Benzoate, Salicylate, Lactat, Lactathydrate, Acrylsäure, Maleinsäure, Bernsteinsäure, von Aminosäuren, von sauren Hydroxofunktionen, Para-Phenolsulfonate, Para-Phenolsulfonathydrate, Acetylacetonathydrate, Tannate, Dimethyldithiocarbamate, Trifluormethansulfonat, Alkylsulfonate, Aralkylsulfonate.

Bevorzugt handelt es sich bei den reaktiven Derivaten um Diorganylphosphinsäureester, -pyroester und/oder -chloride.

Die Erfindung betrifft auch die Verwendung der erfindungsgemäßen Diorganylphosphinsäure-Salze als Flammschutzmittel oder in Flammschutzmittel-Zusammensetzungen, insbesondere für Polymere.
Bevorzugt enthält bei dieser Verwendung die Flammschutzmittel-Zusammensetzung 50 bis 99,9 Gew.-% des erfindungsgemäßen Diorganylphosphinsäure-Salzes und 0,1 bis 50 Gew.-% mindestens eines Additives.

Bevorzugt entstammen bei der Verwendung einer Flammschutzmittel-Zusammensetzung die Additive aus der Gruppe Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphat, Melampolyphosphat, Melempolyphosphat und/oder Melonpolyphosphat; aus der Gruppe oligomere Ester des Tris(hydroxyethyl)iso-cyanurats mit aromatischen Polycarbonsäuren, Benzoguanamin, Tris(hydroxyethyl)isocyanurat, Allantoin, Glycouril, Melamin, Melamincyanurat, Harnstoffcyanurat, Dicyandiamid und/oder Guanidin; aus der Gruppe der Zinkverbindungen wie Zinkoxid, Zinkhydroxid, Zinnoxidhydrat, Zinkcarbonat, Zinkstannat, Zinkhydroxystannat, Zink-Silikat, Zinkphosphat, Zinkborat, Zinkmolybdat; aus der Gruppe der Carbodiimide und/oder (Poly-)isocyanate, wie Carbonylbiscaprolactam und/oder Styrol-Acryl-Polymere.

Die Erfindung betrifft auch die Verwendung der erfindungsgemäßen Diorganylphosphinsäure-Salzen in oder zur Herstellung von flammgeschützten Polymerformmassen, wobei bei dieser Verwendung die flammgeschützte Polymerformmasse 1 bis 50 Gew.-% erfindungsgemäße Diorganylphosphinsäure-Salze, 1 bis 99 Gew.-% Polymer oder Mischungen derselben enthalten.

Bevorzugt entstammen dabei die Polymere aus der Gruppe der thermoplastischen Polymere wie Polyester, Polystyrol oder Polyamid und/oder der duroplastischen Polymere.

Die Erfindung betrifft auch die Verwendung der erfindungsgemäßen Diorganylphosphinsäure-Salze in flammgeschützten Polymerformkörpern, -Filmen, -Fäden und -Fasern, wobei bei dieser Verwendung die flammgeschützten Polymerformkörper, -Filme, -Fäden und -Fasern 1 bis 50 Gew.- % erfindungsgemäße Diorganylphosphinsäure-Salze, 1 bis 99 Gew.-% Polymer oder Mischungen derselben, 0 bis 60 Gew.-% Additive und 0 bis 60 Gew.-% Füllstoff bzw. Verstärkungsmaterialien enthalten.

Unter protonierten Stickstoffbasen werden bevorzugt die protonierten Formen von Ammoniak, primären, sekundären, tertiären und quartären Aminen verstanden.

Unter protonierten Stickstoffbasen werden bevorzugt verstanden die protonierten Formen von Melamin, Harnstoff, Biuret, Guanidin, Alkylguanidin, Arylguanidin, Diphenylguanidin, Biguanid, Allantoin, Acetoguanamin, Benzoguanamin, Tolyltriazol, Benzotriazol, 2-Amino-4-methylpyrimidin, Benzylharnstoff, Ethylendimelamin, Acetylenharnstoff, Hydantoin, Malonsäureamidamidin, Dimethylharnstoff, 5,5-Diphenylhydantoin, N,N'-Diphenylharnstoff, Ethylen-bis-5-triazon, Glycinanhydrid, Tetramethylharnstoff, Triethanolamin, Kondensationsprodukte des Melamins z. B. Melem, Melam oder Melon bzw. höher kondensierte Verbindungen dieses Typs.

Bevorzugt beträgt der wasserlösliche Gehalt aus den teilweise wasserlöslichen, ionisierbaren Verbindungen 3.200 bis 10 ppm, bevorzugt 2.000 bis 40 ppm.

Bevorzugt beträgt der Gesamt-Gehalt an Acetat (teilweise wasserlösliche, ionisierbare Verbindung) 2.800 bis 100 ppm, bevorzugt 2.000 bis 200 ppm und der Gehalt an wasserlöslichem Acetat (wasserlöslicher Gehalt aus der teilweise wasserlöslichen, ionisierbaren Verbindung) 1.100 bis 10 ppm, bevorzugt 800 bis 40 ppm.

Bevorzugt beträgt der Gesamt-Gehalt an Chlorid (teilweise wasserlösliche, ionisierbare Verbindung) 1.700 bis 100 ppm, bevorzugt 1.500 bis 200 ppm und der Gehalt an wasserlöslichem Chlorid (wasserlöslicher Gehalt aus der teilweise wasserlöslichen, ionisierbaren Verbindung) 950 bis 10 ppm, bevorzugt 750 bis 40 ppm.

Bevorzugt beträgt der Gesamt-Gehalt an Phosphit (teilweise wasserlösliche, ionisierbare Verbindung) 8.200 bis 500 ppm, bevorzugt 7.000 bis 1.000 ppm und der Gehalt an wasserlöslichem Phosphit (wasserlöslicher Gehalt aus der teilweise wasserlöslichen, ionisierbaren Verbindung) 3.000 bis 50 ppm, bevorzugt 1.800 bis 100 ppm.

Bevorzugt beträgt der Gesamt-Gehalt an Sulfat (teilweise wasserlösliche, ionisierbare Verbindung) 3.800 bis 100 ppm, bevorzugt 2.500 bis 200 ppm und besonders bevorzugt 1.000 bis 300 ppm und der Gehalt an wasserlöslichem Sulfat (wasserlöslicher Gehalt aus der teilweise wasserlöslichen, ionisierbaren Verbindung) 1.200 bis 10 ppm, bevorzugt 750 bis 50 ppm.

Bevorzugt beträgt der Gesamt-Gehalt an Phosphat (teilweise wasserlösliche, ionisierbare Verbindung) 7000 bis 500 ppm, bevorzugt 5000 bis 1000 ppm und der Gehalt an wasserlöslichem Phosphat (wasserlöslicher Gehalt aus der teilweise wasserlöslichen, ionisierbaren Verbindung) 3.000 bis 50 ppm, bevorzugt 2.000 bis 100 ppm.

Bevorzugt bedeutet M Aluminium, Calcium, Titan, Zink, Zinn oder Zirkonium.

Besonders bevorzugt beträgt die Restfeuchte der erfindungsgemäßen Diorganylphosphinsäure-Salze 0,1 bis 1 %, ihre Teilchengröße 10 bis 100 μm und ihre Schüttdichte 200 bis 700 g/l.

Bevorzugt beträgt die Löslichkeit der erfindungsgemäßen Diorganylphosphinsäure-Salze in Wasser und/oder organischen Lösungsmitteln wie Alkohole, Glycole, aliphatische Kohlenwasserstoffe, alicyclische Kohlenwasserstoffe, aromatische Kohlenwasserstoffe, Halogenkohlenwasserstoffe, Ether, Glykolether, Ketone, Ester und/oder Carbonsäuren zwischen 0,001 und 10 Gew.-%.

Bevorzugt handelt es sich bei den freien Basen um solche Stickstoffbasen wie sie unter "protonierte Stickstoffbasen" beschrieben sind, jedoch in der unprotonierten Form.

Bevorzugt handelt es sich bei dem Salz des gewünschten Kations um Salze von protonierten Stickstoffbasen z. B. von Ammoniak, primären, sekundären, tertiären und quartären Aminen verstanden.

Bevorzugt handelt es sich bei dem Salz des gewünschten Kations um Salze von protonierten Stickstoffbasen z. B. von Melamin, Harnstoff, Biuret, Guanidin, Alkylguanidin, Arylguanidin, Diphenylguanidin, Biguanid, Allantoin, Acetoguanamin, Benzoguanamin, Tolyltriazol, Benzotriazol, 2-Amino-4-methylpyrimidin, Benzylharnstoff, Ethylendimelamin, Acetylenharnstoff, Hydantoin, Malonsäureamidamidin, Dimethylharnstoff, 5,5-Diphenylhydantoin, N,N'-Diphenylharnstoff, Ethylen-bis-5-triazon, Glycinanhydrid, Tetramethylharnstoff, Triethanolamin, Kondensationsprodukte des Melamins z. B. Melem, Melam oder Melon bzw. höher kondensierte Verbindungen dieses Typs.

Bevorzugt beträgt bei der vorgenannten Verwendung die mittlere Teilchengröße der Flammschutzmittel-Zusammensetzung 0,1 bis 3.000 μm, bevorzugt 0,1 bis 1.000 μm und insbesondere 1 bis 100 μm.

Bevorzugt beträgt bei der vorgenannten Verwendung die Restfeuchte der Flammschutzmittel-Zusammensetzung 0,01 bis 10 Gew.-%, bevorzugt 0,1 bis 1 Gew.-%.

Bevorzugt enthält bei dieser Verwendung die flammgeschützte Polymerformmasse 1 bis 50 Gew.-% erfindungsgemäße Diorganylphosphinsäure-Salze, 1 bis 99 Gew.-% Polymer oder Mischungen derselben und 0,1 bis 60 Gew.-% Additive.

Insbesondere enthält bei dieser Verwendung die flammgeschützte Polymer-formmasse 5 bis 30 Gew.-% erfindungsgemäße Diorganylphosphinsäuresalze, 5 bis 90 Gew.-% Polymer oder Mischungen derselben und 5 bis 40 Gew.-% Additive.

Bevorzugt wurde bei dieser Verwendung die Polymerformmasse erhalten, indem die Diorganylphosphinsäure-Salze und/oder die Flammschutzmittel-Zusammensetzungen mit dem Polymergranulat und evtl. Additiven in einem Mischer vermischt, in einem Compoundieraggregat unter höheren Temperaturen in der Polymerschmelze homogenisiert werden und anschließend der homogenisierte Polymerstrang abgezogen, gekühlt und portioniert wird.

Geeignete Compoundieraggregate sind Einwellenextruder, Mehrzonenschnecken oder Doppelschneckenextruder.

Bevorzugt enthalten bei dieser Verwendung die flammgeschützten Polymerformkörper, -Filme, -Fäden und -Fasern 1 bis 50 Gew.- % erfindungsgemäße Diorganylphosphinsäure-Salze, 1 bis 99 Gew.-% Polymer oder Mischungen

derselben, 0,1 bis 60 Gew.-% Additive und 0,1 bis 60 Gew.-% Füllstoff bzw. Verstärkungsmaterialien.

Bevorzugt enthalten bei dieser Verwendung die flammgeschützten Polymerformkörper, -Filme, -Fäden und -Fasern 1 bis 70 Gew.-% erfindungsgemäße Flammschutzmittel-Zusammensetzung oder erfindungsgemäße flammgeschützte Polymerformmasse, 1 bis 99 Gew.-% Polymer oder Mischungen derselben, 0,1 bis 60 Gew.-% Additive und 0,1 bis 60 Gew.-% Füllstoff bzw. Verstärkungsmaterialien.

Bevorzugt betragen bei den Verfahren zur Herstellung von den o. g. Polymerformmassen die Verarbeitungstemperaturen bei Polystyrol 170 bis 200 °C, Polypropylen 200 bis 300 °C, Polyethylenterephthalat (PET) 250 bis 290 °C, Polybutylenterephthalat (PBT) 230 bis 270 °C, Polyamid 6 (PA 6)260 bis 290 °C, Polyamid 6.6 (PA 6.6) 260 bis 290 °C, Polycarbonat 280 bis 320 °C.

Bevorzugt wird beim Verfahren zur Herstellung von flammgeschützten Polymerformkörpern eine flammgeschützte Polymer-Formmassen durch Spritzgießen und Pressen, Schaumspritzgießen, Gasinnendruck-Spritzgießen, Blasformen, Foliengießen, Kalandern, Laminieren, Beschichten etc. zum flammgeschützten Polymerformkörper verarbeitet.

Die Verarbeitungstemperaturen bei dem vorgenannten Verfahren betragen bei Polystyrol 200 bis 250 °C, bei Polypropylen 200 bis 300 °C, bei Polyethylenterephthalat (PET) 250 bis 290 °C, bei Polybutylenterephthalat (PBT) 230 bis 270 °C, bei Polyamid 6 (PA 6) 260 bis 290 °C, bei Polyamid 6.6 (PA 6.6) 6.6 260 bis 290 °C, bei Polycarbonat 280 bis 320 °C betragen.

Die Verträglichkeit eines Additivs mit einem Polymer kann sich darin ausdrücken, wie sehr das mittlere Molekulargewicht bei der Verarbeitung eines Polymers durch das Additiv verringert wird. Man vergleicht dazu eine für das mittlere Molekulargewicht charakteristische Kennzahl des unbehandelten Polymers mit der Kennzahl des mit Additiv behandelten Polymers.

Eine solche dimensionslose Kennzahl ist die spezifische Viskosität (SV-Wert). Diese leitet sich aus der Bestimmung der Viskosität einer Lösung des Polymers in einem Lösungsmittel her. Dabei wird die Viskosität der Polymerlösung zu der Viskosität des reinen Lösungsmittels ins Verhältnis gesetzt.

Die Verträglichkeit wird mit Hilfe der SV-Zahl ausgedrückt. Danach verbessert sich die Verträglichkeit (SV-Zahl) z. B. mit Polybutylenterephthalat ab einem bestimmten Gehalt an teilweise wasserlöslichen ionisierbaren Verbindungen sprunghaft.

Erfindungsgemäß sind bei Polybutylenterephthalat SV-Zahlen von 750 bis 1400 bevorzugt, 850 bis 1250 besonders bevorzugt. Die SV-Zahl kann von einer erfindungsgemäßen Polymer-Formmasse oder von einem Polymerformkörper bestimmt werden.

Zur Beurteilung der Verträglichkeit kann auch der Volumenfließindex (Melt Flow Index, MFI, MVR) herangezogen werden. Ein starker Anstieg des MVR-Wertes deutet auf Polymerabbau hin.

Bei erfindungsgemäßen glasfaserverstärkten flammgeschützten Polymerformmassen auf Basis von Polyamid 6.6 beträgt der Wert 2 bis 200 $cm^3$/min (275 °C, 5 kg).

Bei den teilweise wasserlöslichen, ionisierbaren Verbindungen handelt es sich z. B. um Substanzen aus der Gruppe der anorganischen, organischen, insbesondere auch phosphororganischen Salzen und Mischungen davon.

Bevorzugt sind teilweise wasserlösliche, ionisierbare Verbindungen wie z. B. Fluoride, Chloride, Bromide, Iodide; Hypohalogenite, Halogenite, Halogenate, z. B. Iodat, Perhalogenate, z. B. Perchlorat; Oxide, Hydroxide, Peroxide, Superoxide; Sulfate, Hydrogensulfate, Sulfathydrate, Sulfite, Peroxosulfate; Nitride, Phosphide; Nitrat, Nitrathydrate, Nitrite, Phosphate, Peroxophosphate, Phosphite, Hypophosphite, Pyrophosphate; Carbonate, Hydrogencarbonate, Hydroxidcarbonate, Carbonathydrate, Silicate, Hexafluorosilicate, Hexafluorosilicathydrate, Stannate; Borate, Polyborate, Peroxoborate; Thiocyanate, Cyanate, Cyanide; Chromate, Chromite, Molybdate, Permanganat.

Bevorzugt sind auch teilweise wasserlösliche, ionisierbare Verbindungen mit organischen Anionen aus der Gruppe der Mono-, Di-, Oligo-, Polycarbonsäuren wie z.B. Formiate, Acetate, Acetathydrate, Trifluoracetathydrate, Propionate, Butyrate, Valerate, Caprylate, Oleate, Stearate, Oxalate, Tartrate, Citrate, Citrathydrate, Benzoate, Salicylate, Lactat, Lactathydrate, Acrylsäure, Maleinsäure, Bernsteinsäure, von Aminosäuren (Glyzin), von sauren Hydroxofunktionen (Phenolate etc), Para-Phenolsulfonate, Para-Phenolsulfonathydrate, Acetylacetonathydrate, Tannate, Dimethyldithiocarbamate, Trifluormethansulfonat, Alkylsulfonate, Aralkylsulfonate.

Bevorzugt sind auch teilweise wasserlösliche, ionisierbare Verbindungen mit Anionen aus der Gruppe der Monoorganylphosphinate wie Mono-($C_1$-$_{18}$-Alkyl)-Phosphinate, Mono-($C_6$-$C_{10}$-Aryl)-Phosphinate, Mono-($C_1$-$_{18}$-Aralkyl)-Phosphinate z. B. Monomethylphosphinate Monoethylphosphinate, Monobutylphosphinate, Monohexylphosphinate, Monophenylphosphinate, Monobenzylphosphinate etc.

Bevorzugt sind auch teilweise wasserlösliche, ionisierbare Verbindungen mit Anionen aus der Gruppe der Monoorganylphosphonate wie Mono-($C_1$-$_{18}$-Alkyl)-Phosphonate, Mono-($C_6$-$C_{10}$-Aryl)-Phosphonate, Mono-($C_1$-$_{18}$-Aralkyl)-Phosphonate z. B. Monomethylphosphonate Monoethylphosphonate, Monobutylphosphonate, Monohexylphosphonate, Monophenylphosphonate, Monobenzylphosphonate etc.

Bevorzugt sind teilweise wasserlösliche, ionisierbare Verbindungen mit Kationen der Alkalimetalle sowie mit Kationen von protonierten Stickstoffbasen z. B. von Ammoniak, primären, sekundären, tertiären und quartären Aminen.

Bevorzugt sind teilweise wasserlösliche, ionisierbare Verbindungen mit Kationen der Erdalkalimetalle; mit Kationen der Elemente der dritten Hauptgruppe; mit Kationen der Nebengruppenelemente. Besonders bevorzugt sind dabei Titan, Eisen, Zink.

Der Gehalt an teilweise ionisierbaren Verbindungen folgt aus der Herstellung des Diorganylphosphinsäure-Salzes. Quellen können z. B. das Lösungsmittel und/oder die Ausgangsverbindungen sein.

Der Gehalt an teilweise ionisierbaren Verbindungen ist dabei differenziert zu betrachten. Zunächst ist der gesamte im Metall-Diorganylphosphinat vorhandene Gehalt (Gesamt-Gehalt) wichtig. Bevorzugt sind Gesamt-Gehalte von 8.200 bis 100 ppm, besonders bevorzugt 7.000 bis 200.

Es wurde nun überraschend gefunden, dass sich nur ein Teil der ionisierbaren Verbindungen durch wässrige Extraktion aus dem Diorganylphosphinsäure-Salz entfernen lässt (wasserlöslicher Anteil an ionisierbaren Verbindungen). Der verbleibende Rest, d. h. die Differenz zwischen Gesamt-Gehalt an teilweise ionisierbaren Verbindungen und wasserlöslichem Anteil an ionisierbaren Verbindungen ist auch durch wiederholtes Auswaschen nicht aus dem Diorganylphosphinsäure-Salz extrahierbar. Da es sich bei den vorliegenden Diorganylphosphinsäure-Salzen um polymere Koordinationsverbindungen handelt, können Anionen als Metallphosphinate, Metallhydroxophosphinate bzw. Metallhydroxosalze gebunden sein.

Bevorzugt sind Gehalte wasserlöslichen ionisierbaren Verbindungen von 3.200 bis 10 und besonders bevorzugt 2.000 bis 40 ppm.

Eine Teilchengröße oberhalb des bevorzugten Bereiches erschwert die gleichmäßige Verteilung des erfindungsgemäßen Diorganylphosphinsäure-Salze, eine Teilchengröße unterhalb des bevorzugten Bereiches erschwert die Einarbeitung wegen verstärkter Staubbildung und Explosionsgefahr. Restfeuchten oberhalb der erfindungsgemäß bevorzugten Bereiche bewirken einen verstärkten Polymerabbau.

Das erfindungsgemäße Aluminiumtrisdiethylphosphinat durchläuft bei 160 bis 200, bevorzugt 175 bis 185 °C eine reversible Kristallumwandlung (Röntgenpulverdaten). Eine solche Umwandlung kann bei der Verarbeitung mit Kunststoffen vorteilhaft sein.

Die erfindungsgemäßen Diorganylphosphinsäure-Salze haben einen bevorzugten Gehalt an Initiatoren-Endgruppen 0,0001 bis 10 mol-%, besonders bevorzugt 0,001 bis 1 mol-%. Initiatoren-Endgruppen können beim Radikal-Kettenabbruch an das letzte Molekül der Radikalkette bei der Addition des Olefins an das Hypophosphit gebunden bleiben.

Die erfindungsgemäßen Diorganylphosphinsäure-Salze haben bevorzugte L-Farbwerte von 85 bis 99,9, besonders bevorzugt 90 bis 98.

Diorganylphosphinsäure-Salze mit L-Werten unterhalb des erfindungsgemäßen Bereiches erfordern einen höheren Weißpigmenteinsatz. Dieser verschlechtert die mechanischen Stabilitätseigenschaften des Polymerformkörpers (z. B. E-Modul).

Die erfindungsgemäßen Diorganylphosphinsäure-Salze haben bevorzugte a-Farbwerte von -4 bis +9, besonders bevorzugt -2 bis +6 und bevorzugte b-Farbwerte von -2 bis +6, besonders bevorzugt -1 bis +3.

Die Farbwerte werden im System nach Hunter (CIE-LAB-System, Commission Internationale d'Eclairage) angegeben.

Diorganylphosphinsäure-Salze mit a- bzw. b-Werten außerhalb der obigen Bereiche erfordern einen höheren Weißpigmenteinsatz. Dieser verschlechtert die mechanischen Stabilitätseigenschaften des Polymerformkörpers (z. B. E-Modul).

Die erfindungsgemäßen Diorganylphosphinsäure-Salze zeigen verbesserte Verträglichkeit bei einer Vielfalt von Polymeren, die in erfindungsgemäßen flammgeschützten Polymerformmassen bzw. erfindungsgemäßen flammgeschützten Polymerformkörpern eingesetzt werden, z. B. bei Polyolefinen, Polystyrolen und Polystyrol-Copolymeren, Polyacrylaten und Polymethacrylaten, Vinyl- und Allyl-Polymeren, Homo- und Co-Polymeren von ungesättigten Alkoholen, Polyacetale, Polyphenylensulfide, Polyamide und Co-Polyamide, Polyester, Polycarbonate. Erfindungsgemäß wird das Diorganylphosphinsäure-Salz hergestellt, indem man die Diorganylphosphinsäure mit elementarem Metall, oder einem Metallsalz 0,01 bis 1 Stunden bei 0 bis 300 °C umsetzt. Bevorzugte Metallsalze sind dabei Metalloxide, gemischte Metall-Oxid-Hydroxide, Hydroxide etc.

In einer anderen erfindungsgemäßen Ausführungsform wird das Diorganylphosphinsäure-Salz hergestellt, indem man die Diorganylphosphinsäure mit einer freien Base 0,01 bis 1 Stunden bei 0 bis 300 °C umsetzt.

In einer anderen Ausführungsform wird das erfindungsgemäße Diorganylphosphinsäure-Salz hergestellt, indem man die Diorganylphosphinsäure in Form eines Alkalimetall-Salzes mit einem Salz des gewünschten Kations 0,01 bis 1 Stunden bei 0 bis 300 °C umsetzt.

Bevorzugte Salze, die die gewünschten Kationen liefern, sind dabei Acetate, Hydroxoacetate, Chloride, Hydroxochloride, Nitrate, Sulfate, Hydroxosulfate. Bevorzugt ist deren Konzentration in der wässrigen Lösung 5 bis 95 % (wasserfreier Feststoff), besonders bevorzugt 20 bis 50 Gew.-%.

Erfindungsgemäß sind die Alkalimetall-Diorganylphosphinsäure-Salze in wasserfreier, hydratisierter oder gelöster Form bevorzugt.

Die erfindungsgemäßen Alkalimetall-Diorganylphosphinsäure-Salze haben in Wasser und/oder den üblichen organischen Lösungsmitteln eine bevorzugte Löslichkeit zwischen 1 und 70 Gew.-% (wasserfreier Feststoff).

Die erfindungsgemäßen Diorganylphosphinsäure-Salze des gewünschten Kations haben in Wasser und/oder den üblichen organischen Lösungsmitteln eine bevorzugte Löslichkeit zwischen 0,001 und 10 Gew.-% (wasserfreier Feststoff).

In einer anderen Ausführungsform wird das erfindungsgemäße Diorganylphosphinsäure-Salze hergestellt, indem man die Diorganylphosphinsäure in Form eines reaktiven Derivates mit einem Derivat des gewünschten Kations 0,01 bis 1 Stunden bei 0 bis 300 °C umsetzt. Bevorzugte Diorganylphosphinsäurederivate sind Diorganylphosphinsäureester, -pyroester, -chloride, -phosphate, -acetate, -phenolate.

Die Erfindung betrifft auch die Anwendung der erfindungsgemäßen Diorganylphosphinsäure-Salze in Flammschutzmittel-Zusammensetzungen. Dazu werden sie bevorzugt gemeinsam mit anderen Additiven eingesetzt.

Bevorzugt enthält die erfindungsgemäße Flammschutzmittel-Zusammensetzung ein erfindungsgemäßes Diorganylphosphinsäure-Salz.

Bevorzugt enthält die erfindungsgemäße Flammschutzmittel-Zusammensetzung:

1) 30 bis 99,9 Gew.-% eines erfindungsgemäßen Diorganylphosphinsäure-Salzes
2) 0,1 bis 50 % mindestens eines Additives.

Besonders bevorzugt enthält die erfindungsgemäße Flammschutzmittel-Zusammensetzung 95 bis 70 Gew.-% eines erfindungsgemäßen Diorganylphosphinsäure-Salzes und 5 bis 30 % mindestens eines Additives.

Bevorzugte weitere Additive in Flammschutzmittel-Zusammensetzungen sind z. B. Synergisten wie in DE-A-28 27 867, DE-A-199 33 901, DE-A-196 14 424, DE-A-197 34 437 beschrieben.

Als Synergisten werden Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphate, Melampolyphosphate, Melempolyphosphate und/oder Melonpolyphosphate oder Mischungen davon bevorzugt.

In einer weiteren Ausführungsform sind Kondensationsprodukte des Melamins (z. B. Melam, Melem und/oder Melon) oder Umsetzungsprodukte des Melamins mit Phosphorsäure bzw. Umsetzungsprodukte von Kondensationsprodukten des Melamins mit Phosphorsäure sowie Gemische der genannten Produkte bevorzugt. Kondensationsprodukte des Melamins sind z. B. Melem, Melam oder Melon bzw. höher kondensierte Verbindungen dieses Typs sowie Gemische derselben (WO-96/16948).

Unter den Umsetzungsprodukten mit Phosphorsäure versteht man Verbindungen, die durch Umsetzung von Melamin oder den kondensierten Melaminverbindungen wie Melam, Melem oder Melon etc. mit Phosphorsäure entstehen, wie Melaminpolyphosphat, Melampolyphosphat und Melempolyphosphat bzw. gemischte Polysalze (WO-98/45364, WO-98/08898).

Erfindungsgemäß sind als Synergisten weiterhin bevorzugt oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melaminkondensationsprodukte wie Melam, Melem und/oder Melon, Melamincyanurat, Dicyandiamid und/oder Guanidin.

Erfindungsgemäß sind als Synergisten weiterhin bevorzugt stickstoffhaltige Phosphate der Formeln $(NH_4)_yH_{3-y}PO_4$ bzw. $(NH_4PO_3)_z$, mit y gleich 1 bis 3 und z gleich 1 bis 10.000.

Erfindungsgemäß sind als Synergisten Stickstoffverbindungen bevorzugt, z. B. solche der Formeln (III) bis (VIII) oder Gemische davon

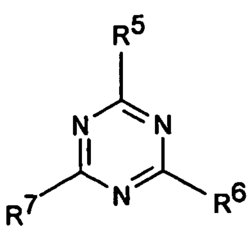

(III)

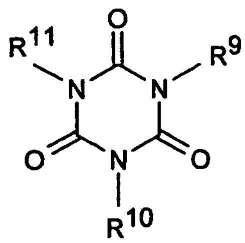

(IV)

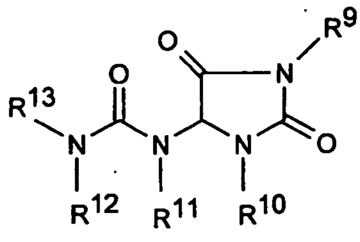

(V)

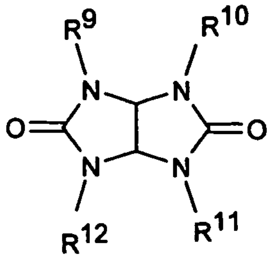

(VI)

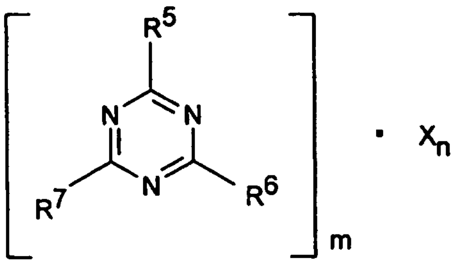

(VII)

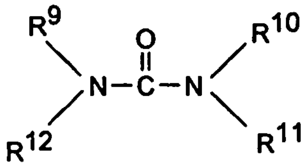

·

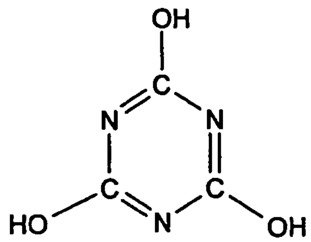

(VIII)

worin

$R^5$ bis $R^7$ Wasserstoff, $C_1$-$C_8$-Alkyl, $C_5$-$C_{16}$-Cycloalkyl oder -Alkylcycloalkyl, möglicherweise substituiert mit einer Hydroxy- oder einer $C_1$-$C_4$-Hydroxyalkyl-Funktion, $C_2$-$C_8$-Alkenyl, $C_1$-$C_8$-Alkoxy, -Acyl, -Acyloxy, $C_6$-$C_{12}$-Aryl oder -Arylalkyl, -$OR^8$ und -$N(R^8)R^9$, sowie N-alicyclisch oder N-aromatisch,

$R^8$ Wasserstoff, $C_1$-$C_8$-Alkyl, $C_5$-$C_{16}$-Cycloalkyl oder -Alkylcycloalkyl, möglicherweise substituiert mit einer Hydroxy- oder einer $C_1$-$C_4$-Hydroxyalkyl-Funktion, $C_2$-$C_8$-Alkenyl, $C_1$-$C_8$-Alkoxy, -Acyl, -Acyloxy oder $C_6$-$C_{12}$-Aryl oder -Arylalkyl,

$R^9$ bis $R^{13}$ die gleichen Gruppen wie $R^8$ sowie -O-$R^8$, m und n unabhängig voneinander 1, 2, 3 oder 4 und X Säuren, die Addukte mit Triazinverbindungen (III) bilden können,

bedeuten.

Bevorzugte weitere Additive in Flammschutzmittel-Zusammensetzungen sind z. B. nach EP-A-1 024 167 Sauerstoffverbindungen des Siliciums, Magnesiumverbindungen, Metallcarbonate von Metallen der zweiten Hauptgruppe des Periodensystems, roter Phosphor, Zink- oder Aluminiumverbindungen.

Bevorzugte weitere Additive in Flammschutzmittel-Zusammensetzungen sind Oxide, Hydroxide, Carbonate, Silikate, Borate, Stannate, gemischte Oxid-Hydroxide, Oxid-Hydroxid-Carbonate, Hydroxid-Silikate, Hydroxid-Borate oder Mischungen davon.

Bevorzugte weitere Additive in Flammschutzmittel-Zusammensetzungen sind z. B. Magnesiumoxid, Magnesiumhydroxid, Hydrotalcite, Dihydrotalcit, Magnesium-Carbonate oder Magnesium-Calcium-Carbonate; Calciumhydroxid, Calciumoxid, Hydrocalumit; Aluminiumoxid, Aluminiumhydroxid, Böhmit, Gibbsit oder Aluminiumphosphat; Manganoxid, Manganhydroxid; Zinnoxid.

Bevorzugte weitere Additive in Flammschutzmittel-Zusammensetzungen sind in DE-A-199 20 276 beschrieben, z. B. aus der Gruppe der Carbodiimide.

Bevorzugte weitere Additive in Flammschutzmittel-Zusammensetzungen sind Carbonylbiscaprolactam oder Styrol-Acryl-Polymere sowie solche aus der Gruppe der sterisch gehinderten Phenole, sterisch gehinderten Amine und Lichtstabilisatoren, Phosphonite, Antioxidantien und Trennmittel.

Bevorzugt wird das erfindungsgemäße Diorganylphosphinsäure-Salz in konfektionierter Form (gecoated, staubreduziert, schmelzgranuliert und/oder tropfgranuliert, kompaktiert, sprühgranuliert, dispergiert, Pastenform u. a.) Flammschutzformulierungen eingesetzt.

Die mittlere Teilchengröße der erfindungsgemäßen Flammschutzmittel-Zusammensetzungen beträgt 0,1 bis 3.000 µm.

Eine Teilchengröße oberhalb des bevorzugten Bereiches erschwert die gleichmäßige Verteilung des erfindungsgemäßen Diorganylphosphinsäure-Salzes, eine Teilchengröße unterhalb des bevorzugten Bereiches erschwert

die Einarbeitung wegen verstärkter Staubbildung und Explosionsgefahr.

Die bevorzugte Schüttdichte der erfindungsgemäßen Flammschutzmittel-Zusammensetzung beträgt 80 bis 1.500 g/l, besonders bevorzugt 200 bis 1.000 g/l.

In einer Ausführungsform beträgt die bevorzugte Schüttdichte der erfindungsgemäßen Flammschutzmittel-Zusammensetzung 80 bis 800 g/l, besonders bevorzugt 200 bis 700 g/l.

In einer anderen Ausführungsform beträgt die bevorzugte Schüttdichte der erfindungsgemäßen Flammschutzmittel-Zusammensetzung 200 bis 1.500 g/l, bevorzugt 300 bis 1.000 g/l.

Insbesondere betrifft die Erfindung die Anwendung der erfindungsgemäßen Diorganylphosphinsäure-Salze und/oder der Flammschutzmittel-Zusammensetzungen in flammgeschützten Polymerformmassen enthaltend Polymer. Erfindungsgemäß bevorzugte Polymere sind thermoplastische wie z. B. wie Polyester, Polystyrol oder Polyamid und/ oder duroplastische Polymere.

Bevorzugt enthält die flammgeschützte Polymerformmasse 1 bis 50 Gew.-% erfindungsgemäße Diorganylphosphinsäure-Salze oder erfindungsgemäße Flammschutzmittel-Zusammensetzung, 1 bis 99 Gew.-% Polymer oder Mischungen derselben 0 bis 60 Gew.-% Additive.

Besonders bevorzugt enthält die flammgeschützte Polymerformmasse
5 bis 30 Gew.-% erfindungsgemäße Diorganylphosphinsäure-Salze oder erfindungsgemäße Flammschutzmittel-Zusammensetzung
5 bis 90 Gew.-% Polymer oder Mischungen derselben
5 bis 40 Gew.-% Additive
5 bis 40 Gew.-% Füllstoff bzw. Verstärkungsmaterialien.

Bevorzugt handelt es sich bei den Polymeren um Polymere von Mono- und Diolefinen, z.B. Polypropylen, Polyisobutylen, Polybuten-1, Poly-4-methylpenten-1, Polyisopren oder Polybutadien sowie Polymerisate von Cycloolefinen, ferner Polyethylen (das gegebenenfalls vernetzt sein kann) sowie Mischungen davon.

Bevorzugt handelt es sich bei den Polymeren um Copolymere von Mono- und Diolefinen untereinander oder mit anderen Vinylmonomeren, ferner Mischungen solcher Copolymere untereinander, z. B. Polypropylen/Ethylen-Propylen-Copolymere, und deren Mischungen mit anderen Polymeren wie z. B. Polyamiden.

Bevorzugt handelt es sich bei den Polymeren um Kohlenwasserstoffharze (z. B. $C_5$-$C_9$) inklusive hydrierte Modifikationen davon (z. B. Klebrigmacherharze) und Mischungen von Polyalkylenen und Stärke.

Bevorzugt handelt es sich bei den Polymeren um Polystyrol, Poly-(p-methylstyrol), Poly-(alpha-methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Blockcopolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, sowie deren Mischungen, wie sie z. B. als so genannte ABS-, MBS-, ASA- oder AES-Polymere bekannt sind.

Bevorzugt handelt es sich bei den Polymeren um halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten und Copolymere der genannten Monomeren untereinander oder mit anderen ungesättigten Monomeren.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7, Polyamid 7,7, Polyamid 8, Polyamid 8,8, Polyamid 9, Polyamid 9,9, Polyamid 10, Polyamid 10,9, Polyamid 10,10, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid Polyhexamethylenterephthalamid) und gegebenenfalls einem Elastomer als Modifikator, z. B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Geeignete Polymeren sind auch Polycarbonate und Polyestercarbonate, Polysulfone, Polyethersulfone und Polyetherketone. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze. Trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugt handelt es sich bei den Polymeren um Mischungen (Polyblends) der vorgenannten Polymeren, wie z. B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugte Verstärkungsmaterialien für flammgeschützte Polymerformmassen und flammgeschützte Polymer-Formkörper sind Fasern, Vliese, Matten, Gewebe, Stränge, Bänder, Schläuche, Litzen, Massiv-, Form- und Hohlkörper.

Bevorzugte Verstärkungsmaterialien für flammgeschützte Polymerformmassen und flammgeschützte Polymer-Formkörper sind anorganische Materialien.

Bevorzugte Verstärkungsmaterialien für flammgeschützte Polymerformmassen und flammgeschützte Polymer-Formkörper sind Polykondensate wie z. B. Polyamid-6, Polyamid-6.6, Polyamid-11, aromatische Polyamide, Poly-p-phenylenterephthalamid, Polyethylenglycolterephthalat, Poly-1,4-dimethylencyclohexanterephthalat, Polycarbonat, Polyurethan-Elastomere.

Bevorzugte Verstärkungsmaterialien für flammgeschützte Polymerformmassen und flammgeschützte Polymer-Formkörper sind Polymerisate wie z. B. Polyethylen, Polypropylen, Polyacrylnitril-Homopolymer, Polyacrylnitril-Mischpolymer, Modacryle, ataktisches Polyvinylchlorid, syndiotaktisches Polyvinylchlorid, Polyvinylalkohol, Polytetrafluorethylen, Polystyrol, Styroflex.

Bevorzugte Verstärkungsmaterialien für flammgeschützte Polymerformmassen und flammgeschützte Polymer-Formkörper sind natürliche und halbsynthetische Fasern.

Die Zugabe von Glasfasern zu Polyamiden innerhalb der erfindungsgemäßen Konzentrationsbereiche führt zu einer bedeutenden Steigerung bei Festigkeit, Steifheit, Erweichungstemperatur, Schleiffestigkeit und Formbeständigkeit.

Ein erfindungsgemäßes Verfahren zur Herstellung von flammgeschützten Polymerformmassen besteht darin die Flammschutzmittel-Zusammensetzungen und/oder Diorganylphosphinsäure-Salze mit dem Polymergranulat und evtl. Additiven in einem Mischer zu vermischen und in einem erfindungsgemäßen Compoundieraggregat unter erfindungsgemäßen Bedingungen in der Polymerschmelze zu homogenisieren. Der homogenisierte Formmassen-Strang wird abgezogen, im Wasserbad gekühlt und anschließend granuliert.

In einer anderen Ausführungsform werden die Flammschutzmittel-Zusammensetzungen und/oder Diorganylphosphinsäure-Salze und/oder die Additive in einem Extruder durch einen Seiteneinzug zu dem Polymerstrom zudosiert und homogenisiert.

Geeignete Compoundieraggregate sind Einwellenextruder bzw. Einschneckenextruder; Mehrzonenschnecken-Extruder mit Dreizonenschnecken und/oder Kurzkompressionsschnecken; Doppelschneckenextruder; Ring-Extruder; Planetwalzenextruder; Entgasungs-Extruder; Kaskadenextruder; Maillefer-Schnecken und/oder Compounder mit gegenläufiger Doppelschnecke.

Die flammgeschützte Polymerformmasse liegt bevorzugt in Granulatform (Compound) vor.

Die erfindungsgemäßen flammgeschützten Polymerformmasse haben eine Restfeuchte von 0,01 bis 10 Gew.-%, bevorzugt von 0,1 bis 1 Gew.-%. Restfeuchten oberhalb der erfindungsgemäß bevorzugten Bereiche bewirken einen verstärkten Polymerabbau.

Erfindungsgemäß sind bei Polybutylenterephthalat-Formmassen SV-Zahlen von 750 bis 1.400 bevorzugt, 950 bis 1.300 besonders bevorzugt und 1.000 bis 1.200 besonders bevorzugt.

Zur Beurteilung der Verträglichkeit kann auch der Volumenfließindex (Melt Flow Index, MFI, MVR) herangezogen werden. Ein starker Anstieg des MVR-Wertes deutet auf Polymerabbau hin.

Bei erfindungsgemäßen glasfaserverstärkten flammgeschützten Polymerformmassen auf Basis von Polyamid 6.6 beträgt der Wert 2 bis 200 $cm^3$/min (275 °C, 5 kg).

Die erfindungsgemäßen flammgeschützten Polymerformmassen eignen sich zur Herstellung von Fasern, Folien und Formkörpern, insbesondere für Anwendungen im Elektro- und Elektronikbereich.

Erfindungsgemäß bevorzugt ist die Anwendung der erfindungsgemäßen flammgeschützten Polymerformkörpern als Lampenteile wie Lampenfassungen und -halterungen, Stecker und Steckerleisten, Spulenkörper, Gehäuse für Kondensatoren oder Schaltschütze sowie Sicherungsschalter, Relaisgehäuse und Reflektoren.

Bei dem Polymer der Polymerformkörper, -Filme, -Fäden und -Fasern handelt es sich bevorzugt um ein thermoplastisches oder duroplastisches Polymer.

Bevorzugt enthalten die Polymerformkörper, -Filme, -Fäden und -Fasern
1 bis 50 Gew.-% erfindungsgemäßen Diorganylphosphinsäure-Salze
1 bis 99 Gew.-% Polymer oder Mischungen derselben
0,1 bis 60 Gew.-% Additive
0,1 bis 60 Gew.-% Füllstoff bzw. Verstärkungsmaterialien.

Bevorzugt enthalten die Polymerformkörper, -Filme, -Fäden und -Fasern
1 bis 70 Gew.- % erfindungsgemäßen Flammschutzmittel-Zusammensetzungen
1 bis 99 Gew.-% Polymer oder Mischungen derselben
0,1 bis 60 Gew.-% Additive
0,1 bis 60 Gew.-% Füllstoff bzw. Verstärkungsmaterialien.

Bevorzugt enthalten die Polymerformkörper, -Filme, -Fäden und -Fasern
1 bis 99 Gew.- % erfindungsgemäßen flammgeschützten Kunststoffformmassen
1 bis 99 Gew.-% Polymer oder Mischungen derselben
0,1 bis 60 Gew.-% Additive
0,1 bis 60 Gew.-% Füllstoff bzw. Verstärkungsmaterialien.

Überraschend wurde gefunden, dass die mechanischen Eigenschaften von Polymerformkörpern, die auf den erfindungsgemäßen Diorganylphosphinsäure-Salzen, Flammschutzmitteln oder flammgeschützten Formmassen basieren, erheblich besser sind, als der Stand der Technik.

Bevorzugt beträgt der E-Modul von Polymerformkörpern, die auf den erfindungsgemäßen Diorganylphosphinsäure-Salzen, Flammschutzmitteln oder flammgeschützten Formmassen und Polybutylenterephthalat, Polyamid 6.6 oder Polyamid 6, basieren 10.000 bis 12.000 $N/mm^2$.

Bevorzugtes Verfahren zur Herstellung von flammgeschützten Polymerformkörpern ist das Spritzgießen und Pressen, Schaumspritzgießen, Blasformen, Foliengießen, Kalandern, Laminieren, Beschichten, Spinnen etc.

Bevorzugte Additive für flammgeschützte Polymerformmassen und flammgeschützte Polymer-Formkörper sind Antioxidantien, UV-Absorber, Lichtschutzmittel, Gleitmittel, Farbmittel, Antistatika, Nukleierungsmittel; organische Verbindungen wie Mono- oder Polycarbonsäuren sowie ihre Salze oder polymere Verbindungen; Füllstoffe.

Erfindungsgemäß ist eine Flammschutz-Beschichtung enthaltend mindestens
1 bis 50 % erfindungsgemäße Flammschutzmittel-Zusammensetzung
0 bis 60 % Ammoniumpolyphosphat.

Experimentelles

Bestimmung der Kornverteilung mit dem Microtrac Granulometer

Die Teilchengröße in wässriger Dispersion wird mit Hilfe eines Granulometer Microtrac ASVR/FRA der Fa. Leeds u. Northrup bestimmt. Gemessen wird die Reflexion bzw. Beugung eines Laserstrahls beim Durchdringen der Dispersion. Hierfür werden 400 ml Ethanol durch die Lasermesszelle gepumpt. Automatisch wird die Festkörperprobe (z. B. 70 mg) zudosiert und nach 10 min die Teilchengrößenverteilung bestimmt. Die Auswertungseinheit des Gerätes berechnet den d50- und den d90-Wert.

Bestimmung des Gesamt-Sulfat-Gehaltes

Eine Probe des erfindungsgemäßen Diorganylphosphinsäure-Salzes wird in einem Lösungsmittel (bevorzugt Wasser, Natronlauge oder Salzsäure) gelöst und das Sulfat nach den üblichen Verfahren (bevorzugt ist die Ionenchromatographie) quantifiziert.

Bestimmung des löslichen Sulfat-Gehaltes

90 g einer 2 %igen Isopropanol-Lösung werden einem 250 ml Becherglas eingewogen und in einem Temperierbad auf 90 °C erwärmt und mit einer Dissolverscheibe mit 900 U/min gerührt. Dann werden 10 g Diorganylphosphinsäure-Salz zugegeben. Die Suspension wird 5 min bei 900 U/min und bei 90 °C gerührt. Der Feststoff wird mit einer Nutsche (Filter: Schwarzband, 9 cm Durchmesser) abgenutscht und der Filterkuchen anschließend mit 20 g ca. 90 °C heißem VE-Wasser gewaschen. Das Filtrat wird auf 100 g mit VE-Wasser aufgefüllt. Die Lösung wird mittels Ionenchromatographie auf den Sulfatgehalt analysiert. Der lösliche Sulfatgehalt berechnet sich wie folgt: Sulfatgehalt (Probe) [mg/kg] = Sulfatgehalt (im Filtrat) [mg/kg] * Endvolumen [mg] / Einwaage Diorganylphosphinsäure-Salz [mg]

Bestimmung der SV-Zahl (Spezifische Viskosität)

0,5 g der Polymerprobe (z. B. PBT) werden mit 50 ml Dichloressigsäure (LM) in einen 250 ml Erlenmeyerkolben mit Schliffstopfen eingewogen. Die Probe wird unter Rühren bei 25 °C über einen Zeitraum von 16 h gelöst. Die Lösung wird über eine G1-Glasfritte filtriert. 20 ml der Lösung werden in die Kapillare gefüllt, in das (Ubbelohde) Kapillarviskosimeter eingehängt und auf 25 °C temperiert. Der SV-Wert errechnet sich nach der Formel:

$$\text{SV-Wert} = 100 * [\text{Durchlaufzeit (Probenlösung)}/\text{Durchlaufzeit (LM)} - 1].$$

Statt Dichloressigsäure kann für Polyethylenterephthalat und Polybutylenterephtalat auch ein Gemisch von Phenol und 1,2-Dichlorbenzol (1:1, w/w) oder m-Kresol eingesetzt werden. Für Polyamid können Schwefelsäure, Ameisensäure oder m-Kresol verwendet werden.

Herstellung, Verarbeitung und Prüfung von flammhemmenden Compounds und Kunststoff-Formkörper.
Die Flammschutzkomponenten werden mit dem Polymergranulat und evtl. Additiven vermischt und auf einem Doppelschnecken-Extruder (Typ Leistritz LSM 30/34) bei Temperaturen von 230 bis 260 °C (glasfaserverstärktes PBT) bzw. von 260 bis 280 °C (glasfaserverstärktes PA 66) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (glasfaserverstärktes PBT) bzw. von 260 bis 290 °C (glasfaserverstärktes PA 66) zu Prüfkörpern verarbeitet.

Beispiel 1 (Vergleich, unbehandeltes Polymer)

In einem Laborkneter werden 70 g vorgetrocknetes Celanex® 2500 (PBT) bei 240 °C über einen Zeitraum von 6 min bei 40 Upm gemischt. Nach dem Erkalten wird von einer Probe der Masse der SV-Wert zu 1386 bestimmt.

Beispiel 2, Vergleich

In einem Laborkneter werden 56 g vorgetrocknetes Celanex® 2500 (PBT) und 14 g Diorganylphosphinsäure-Salz nach DE19851618, Beispiel 2 (Acetatgehalt 8.800 ppm) bei 240 °C über einen Zeitraum von 6 min bei 40 Upm

gemischt. Nach dem Erkalten wird von einer Probe der Masse der SV-Wert zu 578 bestimmt. Dieser Wert zeigt unzureichende Verträglichkeit des Diorganylphosphinsäure-Salzes mit dem Polymer an.

Beispiel 3, Vergleich

In einem Laborkneter werden 56 g vorgetrocknetes Celanex® 2500 (PBT) und 14 g Diorganylphosphinsäure-Salz nach DE-19851618, Beispiel 4 (Acetatgehalt 4.500 ppm) bei 240 °C über einen Zeitraum von 6 min bei 40 Upm gemischt. Nach dem Erkalten wird von einer Probe der Masse der SV-Wert zu 589 bestimmt (unzureichende Verträglichkeit des Diorganylphosphinsäure-Salzes mit dem Polymer).

Beispiel 4

In einem Laborkneter werden 56 g vorgetrocknetes Celanex® 2500 (PBT) und 14 g Diorganylphosphinsäure-Salz (Gesamt-Acetatgehalt 3.000 ppm, löslicher AcetatGehalt 1.680 ppm) bei 240 °C über einen Zeitraum von 6 min bei 40 Upm gemischt. Nach dem Erkalten wird von einer Probe der Masse der SV-Wert zu 673 bestimmt.

Beispiel 5, Vergleich

In einem Laborkneter werden 56 g vorgetrocknetes Celanex® 2500 (PBT) und 14 g Diorganylphosphinsäure-Salz (Gesamt-Nitratgehalt 2.204 ppm, löslicher Nitrat-Gehalt 1.411 ppm) bei 240 °C über einen Zeitraum von 6 min bei 40 Upm gemischt. Nach dem Erkalten wird von einer Probe der Masse der SV-Wert zu 654 bestimmt (unzureichende Verträglichkeit des Diorganylphosphinsäure-Salzes mit dem Polymer).

Beispiel 6

In einem Laborkneter werden 56 g vorgetrocknetes Celanex® 2500 (PBT) und 14 g Diorganylphosphinsäure-Salz (Gesamt-Nitratgehalt 2.100 ppm, löslicher Nitrat-Gehalt 1.134 ppm) bei 240 °C über einen Zeitraum von 6 min bei 40 Upm gemischt. Nach dem Erkalten wird von einer Probe der Masse der SV-Wert zu 781 bestimmt.

Beispiel 7

In einem Laborkneter werden 56 g vorgetrocknetes Celanex® 2500 (PBT) und 14 g Diorganylphosphinsäure-Salz (Gesamt-Nitratgehalt 820 ppm, löslicher Nitrat-Gehalt 295 ppm) bei 240 °C über einen Zeitraum von 6 min bei 40 Upm gemischt. Nach dem Erkalten wird von einer Probe der Masse der SV-Wert zu 1029 bestimmt.

Beispiel 8

In einem Laborkneter werden 56 g vorgetrocknetes Celanex® 2500 (PBT) und 14 g Diorganylphosphinsäure-Salz (Gesamt-Nitratgehalt 177 ppm, löslicher Nitrat-Gehalt 21 ppm) bei 240 °C über einen Zeitraum von 6 min bei 40 Upm gemischt. Nach dem Erkalten wird von einer Probe der Masse der SV-Wert zu 1207 bestimmt.

Beispiel 9

In einem Laborkneter werden 56 g vorgetrocknetes Celanex® 2500 (PBT) und 14 g Diorganylphosphinsäure-Salz (Gesamt-Nitratgehalt 164 ppm, löslicher Nitrat-Gehalt 13 ppm) bei 240 °C über einen Zeitraum von 6 min bei 40 Upm gemischt. Nach dem Erkalten wird von einer Probe der Masse der SV-Wert zu 1252 bestimmt.

Beispiel 10, Vergleich

Gemäß der allgemeinen Vorschrift wird eine Mischung von 50 Gew.-% Polybutylenterephthalat, 15 Gew.-% Phosphinsäuresalz aus Beispiel 2, 5 Gew.-% Melamincyanurat und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und ein E-Modul von 9.150 $N/mm^2$ gemessen.

Beispiel 11, Vergleich

Gemäß der allgemeinen Vorschrift wird eine Mischung von 50 Gew.-% Polybutylenterephthalat, 15 Gew.-%

Phosphinsäuresalz aus Beispiel 3, 5 Gew.-% Melamincyanurat und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und ein E-Modul von 9.573 N/mm$^2$ gemessen.

Beispiel 12

Gemäß der allgemeinen Vorschrift wird eine Mischung von 50 Gew.-% Polybutylenterephthalat, 20 Gew.-% Phosphinsäuresalz aus Beispiel 6 und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und eine UL-94 Klassifizierung von V-0 bestimmt.

Beispiel 13, Vergleich

Gemäß der allgemeinen Vorschrift wird eine Mischung von 50 Gew.-% Polyamid 6.6, 13,3 Gew.-% Phosphinsäuresalz aus Beispiel 2, 6,7 Gew.-% Melaminpolyphosphat und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und ein E-Modul von 9.000 N/mm$^2$ gemessen. Außerdem wurde eine UL-94 Klassifizierung von V-0 bestimmt.

Beispiel 14, Vergleich

Gemäß der allgemeinen Vorschrift wird eine Mischung von 50 Gew.-% Polyamid 6.6, 15 Gew.-% Phosphinsäuresalz aus Beispiel 2, 4 Gew.-% Melaminpolyphosphat, 1 Gew.-% Zinkborat und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und ein E-Modul von 9.100 N/mm$^2$ gemessen.

Beispiel 15, Vergleich

Gemäß der allgemeinen Vorschrift wird eine Mischung von 50 Gew.-% Polyamid 6.6, 15 Gew.-% Phosphinsäuresalz aus Beispiel 3, 4 Gew.-% Melaminpolyphosphat, 1 Gew.-% Zinkborat und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und ein E-Modul von 9.500 N/mm$^2$ gemessen.

Beispiel 16

Gemäß der allgemeinen Vorschrift wird eine Mischung von 50 Gew.-% Polyamid 6.6, 4 Gew.-% Phosphinsäuresalz aus Beispiel 9, 15 Gew.-% Melaminpolyphosphat, 1 Gew.-% Zinkhydroxystannat und 30 Gew.-% Glasfasern auf einem Doppelschnecken-Extruder bei 230 bis 260 °C zu einer Polymerformmasse compoundiert. Nach Trocknung werden die Formmassen auf einer Spritzgießmaschine bei 240 bis 270 °C zu Polymerformkörper verarbeitet und eine UL-94 Klassifizierung von V-0 bestimmt. Wegen der günstigeren UL-94 Klassifizierung sind die Zusammensetzung der diesem Beispiel zugrunde liegenden Flammschutzformulierung enthaltend Phosphinsäuresalz, Melaminpolyphosphat und Zinkhydroxystannat, die Zusammensetzung der diesem Beispiel zugrunde liegenden Polymerformmasse enthaltend Polyamid und Flammschutzformulierung (enthaltend Phosphinsäuresalz, Melaminpolyphosphat und Zinkhydroxystannat) sowie die diesem Beispiel zugrunde liegende Polymerformkörper-Zusammensetzung enthaltend Polymerformmasse und Additive bevorzugt gegenüber solchen, die V-1 und V-2 Klassifizierungen ergeben.

Verwendete Chemikalien

| | |
|---|---|
| Polybutylenterephthalat: | Celanex 2500, Fa. Ticona |
| Polyamid 6.6: | Ultramid A3, Fa. BASF |
| Polyamid 6: | Zytel 7301, Fa. Du Pont |
| Melaminpolyphosphat: | Melapur 200/70, Fa. Ciba DSM-Melapur |

(fortgesetzt)

| | |
|---|---|
| Melamincyanurat: | Melapur MC, Fa. Ciba DSM-Melapur |
| Zinkborat: | Firebrake 500, Fa. Borax |
| Zinkoxid: | Fa. Rheinchemie |
| Zinkhydroxystannat: | Flamtard H, Fa. Blythe |
| Zinkstearat: | Liga 101, Fa. Greven Fett-Chemie |
| Glasfasern 1: | Vetrotex EC 10 983, Fa. Saint-Gobain |
| Glasfasern 2: | PPG 3540, Fa. PPG Industries, Inc. |

Tabelle 1

| Beispiel | Acetat | | Nitrat | | SV-Zahl |
|---|---|---|---|---|---|
| | Gesamt [ppm] | Löslich [ppm] | Gesamt [ppm] | Löslich [ppm] | |
| 1 (Vgl. Polymer) | - | - | - | - | 1386 |
| 2 (Vgl.) DE19851618, Bsp. 2 | 8800 | - | - | - | 578 |
| 3 (Vgl.) DE19851618, Bsp. 4 | 4500 | - | - | - | 589 |
| 4 (Vgl.) | 3000 | 1680 | - | - | 673 |
| 5 (Vgl.) | - | - | 2204 | 1411 | 654 |
| 6 | - | - | 2100 | 1134 | 781 |
| 7 | - | - | 820 | 295 | 1029 |
| 8 | - | - | 177 | 21 | 1207 |
| 9 | - | - | 164 | 13 | 1252 |

Tabelle 2

| | | Beispiel | | | | | | |
|---|---|---|---|---|---|---|---|---|
| | | 10 (Vgl.) | 11 (Vgl.) | 12 | 13 | 14 | 15 | 16 |
| Polybutylenterephthalat | [Gew.-%] | 50 | 50 | 50 | - | - | - | - |
| Polyamid 6.6 | [Gew.-%] | - | - | - | 50 | 50 | 50 | 50 |
| Polyamid 6 | [Gew.-%] | - | - | - | - | - | - | - |
| Phosphinsäuresalz Bsp. 2 (Vgl.) | [Gew.-%] | 15 | - | - | 13,3 | 15 | - | - |
| Phosphinsäuresalz Bsp. 3 (Vgl.) | [Gew.-%] | - | 15 | - | - | - | 15 | - |
| Phosphinsäuresalz Bsp. 15 | [Gew.-%] | - | - | 20 | - | - | - | - |
| Phosphinsäuresalz Bsp. 18 | [Gew.-%] | - | - | - | - | - | - | 4 |
| Melaminpolyphosphat | [Gew.-%] | - | - | - | 6,7 | 4 | 4 | 15 |
| Melamincyanurat | [Gew.-%] | 5 | 5 | - | - | - | - | - |
| Zinkborat | [Gew.-%] | - | - | - | - | 1 | 1 | - |
| Zinkoxid | [Gew.-%] | - | - | - | - | - | - | - |
| Zinkhydroxystannat | [Gew.-%] | - | - | - | - | - | - | 1 |
| Zinkstearat | [Gew.-%] | - | - | - | - | - | - | - |
| Glasfasern 1 | [Gew.-%] | 30 | 30 | 30 | - | - | - | - |
| Glasfasern 2 | [Gew.-%] | - | - | - | 30 | 30 | 30 | 30 |
| E-Modul | [$N/mm^2$] | 9150 | 9573 | - | 9000 | 9100 | 9500 | - |

(fortgesetzt)

| | | Beispiel | | | | | | |
|---|---|---|---|---|---|---|---|---|
| | | 10 (Vgl.) | 11 (Vgl.) | 12 | 13 | 14 | 15 | 16 |
| UL-94 Klassifizierung | - | V-0 | V-0 | V-0 | V-0 | V-0 | V-0 | V-0 |

**Patentansprüche**

1. Diorganylphosphinsäure-Salze der Formel (I),

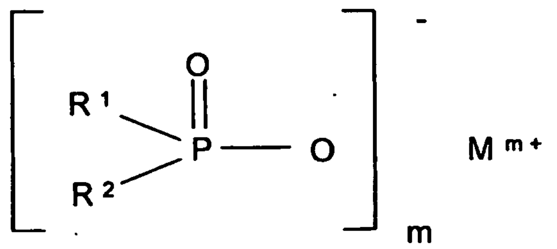

(I)

worin

$R^1$, $R^2$ gleich oder verschieden sind und $C_1$-$C_6$-Alkyl, linear oder verzweigt und/oder Aryl;
M Mg, Ca, Al, Sb, Sn, Ge, Ti, Fe, Zr, Zn, Ce, Bi, Sr, Mn, Li, Na, K und/oder eine protonierte Stickstoffbase;
m 1 bis 4; x 1 bis 4

bedeuten, **dadurch gekennzeichnet, dass** der Gesamt-Gehalt an teilweise wasserlöslichen, ionisierbaren Verbindungen und der wasserlösliche Gehalt aus den teilweise Wasserlöslichen, ionisierbaren Verbindungen 8.200 bis 100 ppm, und dass es sich bei den teilweise wasserlöslichen, ionisierbaren Verbindungen um solche handelt, die sich von Acetaten, Chloriden, Nitraten, Sulfaten, Phosphiten oder Phosphaten ableiten und dass der Gesamt-Gehalt an Nitrat (teilweise wasserlösliche, ionisierbare Verbindung) 2.100 bis 100 ppm und der Gehalt an wasserlöslichem Nitrat (wasserlöslicher Gehalt aus der teilweise wasserlöslichen, ionisierbaren Verbindung) 1.100 bis 10 ppm beträgt.

2. Diorganylphosphinsäure-Salze der Formel (I) nach Anspruch 1, **dadurch gekennzeichnet, dass** M Aluminium, Calcium, Titan, Zink, Zinn oder Zirkonium bedeutet.

3. Diorganylphosphinsäure-Salze der Formel (I) nach Anspruch 1 oder 2, **dadurch gekennzeichnet, dass** $R^1$, $R^2$ gleich oder verschieden sind und Methyl, Ethyl, n-Propyl, iso-Propyl, n-Butyl, tert.-Butyl, n-Pentyl und/oder Phenyl bedeuten.

4. Diorganylphosphinsäure-Salze der Formel (I) nach einem oder mehreren der Ansprüche 1 bis 3, **dadurch gekennzeichnet, dass** es sich bei den Diorganylphosphinsäure-Salzen der Formel (I) um solche aus der Gruppe Aluminiumtrisdiethylphosphinat, Aluminiumtrismethylethylphosphinat, Aluminiumtrisdiphenylphosphinat, Zinkbisdiethylphosphinat, Zinkbismethylethylphosphinat, Zinkbisdiphenylphosphinat, Titanylbisdiethylphosphinat, Titantetrakisdiethylphosphinat, Titanylbismethylethylphosphinat, Titantetrakismethylethylphosphinat, Titanylbisdiphenylphosphinat, Titantetrakisdiphenylphosphinat und beliebige Mischungen davon handelt.

5. Diorganylphosphinsäure-Salze der Formel (I) nach einem oder mehreren der Ansprüche 1 bis 4, **dadurch gekennzeichnet, dass** ihre Restfeuchte 0,01 bis 10 Gew.-%, ihre Teilchengröße 0,1 bis 1.000 µm und ihre Schüttdichte 80 bis 800 g/l beträgt.

6. Verfahren zur Herstellung von Diorganylphosphinsäure-Salzen der Formel (I) nach einem oder mehreren der Ansprüche 1 bis 5, **dadurch gekennzeichnet, dass** man die Diorganylphosphinsäure

a) mit einer freien Base oder
b) mit dem elementarem Metall des gewünschten Kations oder
c) in ihrer Form als Alkalimetall-Salz mit einem Salz des gewünschten Kations oder
d) in Form eines reaktiven Derivates mit einem Derivat des gewünschten Kations 0,01 bis 1 Stunden bei 0 bis 300 °C umsetzt.

7. Verfahren nach Anspruch 6, **dadurch gekennzeichnet, dass** es sich bei der freien Base um Stickstoffbasen, wie Ammoniak, primären, sekundären, tertiären und quartären Aminen; Melamin, Harnstoff, Guanidin, Alkylguanidin, Arylguanidin, Diphenylguanidin, Biguanid, Biuret, Allantoin, Acetoguanamin, Benzoguanamin, Tolyltriazol, Benzotriazol, 2-Amino-4-methylpyrimidin, Benzylharnstoff, Ethylendimelamin, Acetylenharnstoff, Hydantoin, Malonsäureamidamidin, Dimethylharnstoff, 5,5-Diphenylhydantoin, N,N'-Diphenylharnstoff, Ethylen-bis-5-triazon, Glycinanhydrid, Tetramethylharnstoff, Triethanolamin und/oder Kondensationsprodukte des Melamins handelt.

8. Verfahren nach Anspruch 6, **dadurch gekennzeichnet, dass** es sich bei der freien Base um ein Oxid, gemischtes Metall-Oxid-Hydroxid, Hydroxid, Carbonat, Hydroxidcarbonat und/oder Hydrogencarbonat des gewünschten Kations handelt.

9. Verfahren nach einem oder mehreren der Ansprüche 6 bis 8, **dadurch gekennzeichnet, dass** es sich bei den gewünschten Kationen um Mg, Ca, Al, Sb, Sn, Ge, Ti, Fe, Zr, Zn, Ce, Bi, Sr, Mn, Li, Na und/oder K handelt.

10. Verfahren nach einem oder mehreren der Ansprüche 6 bis 9, **dadurch gekennzeichnet, dass** es sich bei den Salz des gewünschten Kations um Fluoride, Chloride, Bromide, Iodide, Hypohalogenite, Halogenite, Halogenate, Iodat, Perhalogenate, Perchlorat, Oxide, Hydroxide, Peroxide, Superoxide; Sulfate, Hydrogensulfate, Sulfathydrate, Sulfite, Peroxosulfate; Nitride, Phosphide; Nitrat, Nitrathydrate, Nitrite, Phosphate, Peroxophosphate, Phosphite, Hypophosphite, Pyrophosphate; Carbonate, Hydrogencarbonate, Hydroxidcarbonate, Carbonathydrate, Silicate, Hexafluorosilicate, Hexafluorosilicathydrate, Stannate; Borate, Polyborate, Peroxoborate; Thiocyanate, Cyanate, Cyanide; Chromate, Chromite, Molybdate, Permanganat handelt.

11. Verfahren nach einem oder mehreren der Ansprüche 6 bis 9, **dadurch gekennzeichnet, dass** es sich bei den Salz des gewünschten Kations um Verbindungen mit organischen Anionen aus der Gruppe der Mono-, Di-, Oligo-, Polycarbonsäuren, wie Formiate, Acetate, Acetathydrate, Trifluoracetathydrate, Propionate, Butyrate, Valerate, Caprylate, Oleate, Stearate, Oxalate, Tartrate, Citrate, basische Citrate, Citrathydrate, Benzoate, Salicylate, Lactat, Lactathydrate, Acrylsäure, Maleinsäure, Bernsteinsäure, von Aminosäuren (Glyzin), von sauren Hydroxofunktionen (Phenolate), Para-Phenolsulfonate, Para-Phenolsulfonathydrate, Acetylacetonathydrate, Tannate, Dimethyldithiocarbamate, Trifluormethansulfonat, Alkylsulfonate, Aralkylsulfonate handelt.

12. Verfahren nach einem oder mehreren der Ansprüche 6 bis 11, **dadurch gekennzeichnet, dass** es sich bei den reaktiven Derivaten um Diorganylphosphinsäureester, -pyroester und/oder -chloride handelt.

13. Verwendung von Diorganylphosphinsäure-Salzen nach einem oder mehreren der Ansprüche 1 bis 5 als Flammschutzmittel oder in Flammschutzmittel-Zusammensetzungen, insbesondere für Polymere, **dadurch gekennzeichnet, dass** die Flammschutzmittel-Zusammensetzung 50 bis 99,9 Gew.-% eines Diorganylphosphinsäure-Salzes nach einem oder mehreren der Ansprüche 1 bis 5 und 0,1 bis 50 Gew.-% mindestens eines Additives enthält, wobei die Additive aus der Gruppe Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphat, Melampolyphosphat, Melempolyphosphat und/oder Melonpolyphosphat; aus der Gruppe oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Harnstoffcyanurat, Dicyandiamid und/oder Guanidin; aus der Gruppe der Zinkverbindungen wie Zinkoxid, Zinkhydroxid, Zinnoxidhydrat, Zinkcarbonat, Zinkstannat, Zinkhydroxystannat, Zink-Silikat, Zinkphosphat, Zinkborat, Zinkmolybdat; aus der Gruppe der Carbodiimide und/oder (Poly-)isocyanate, wie Carbonylbiscaprolactam und/oder Styrol-Acryl-Polymere entstammen.

14. Verwendung von Diorganylphosphinsäure-Salzen nach einem oder mehreren der Ansprüche 1 bis 5 in oder zur Herstellung von flammgeschützten Polymerformmassen, **dadurch gekennzeichnet, dass** die flammgeschützte Polymerformmasse 1 bis 50 Gew.-% Diorganylphosphinsäure-Salze nach mindestens einem der Ansprüche 1 bis 5, 1 bis 99 Gew.-% Polymer oder Mischungen derselben enthält.

**15.** Verwendung nach Anspruch 14, **dadurch gekennzeichnet, dass** die Polymere aus der Gruppe der thermoplastischen Polymere wie Polyester, Polystyrol oder Polyamid und/oder der duroplastischen Polymere entstammen.

**16.** Verwendung der Diorganylphosphinsäure-Salze nach mindestens einem der Ansprüche 1 bis 5 in flammgeschützten Polymerformkörpern, -Filmen, -Fäden und -Fasern, **dadurch gekennzeichnet, dass** die flammgeschützten Polymerformkörper, -Filme, -Fäden und -Fasern 1 bis 50 Gew.-% Diorganylphosphinsäure-Salze nach einem oder mehreren der Ansprüche 1 bis 5, 1 bis 99 Gew.-% Polymer oder Mischungen derselben, 0 bis 60 Gew.-% Additive und 0 bis 60 Gew.-% Füllstoff bzw. Verstärkungsmaterialien enthalten.

## Claims

**1.** A diorganylphosphinic salt of the formula (I)

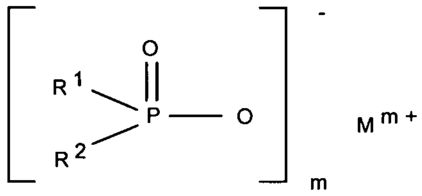

(I)

where

$R^1$ and $R^2$ are identical or different and are $C_1$-$C_6$-alkyl, linear or branched, and/or aryl;
M is Mg, Ca, Al, Sb, Sn, Ge, Ti, Fe, Zr, Zn, Ce, Bi, Sr, Mn, Li, Na, K, and/or a protonated nitrogen base;
m is from 1 to 4; x is from 1 to 4,

wherein the total content of partially water-soluble, ionizable compounds and the water-soluble content of the partially water-soluble, ionizable compounds is from 8200 to 100 ppm and wherein the partially water-soluble, ionizable compounds comprise compounds which derive from acetates, from chlorides, from nitrates, from sulfates, from phosphites, or from phosphates, and wherein the total content of nitrate (partially water-soluble, ionizable compound) is from 2100 to 100 ppm, and the content of water-soluble nitrate (water-soluble content of the partially water-soluble, ionizable compound) is from 1100 to 10 ppm.

**2.** The diorganylphosphinic salt of the formula (I) as claimed in claim 1, wherein M is aluminum, calcium, titanium, zinc, tin or zirconium.

**3.** The diorganylphosphinic salt of the formula (I) as claimed in claim 1 or 2, wherein $R^1$ and $R^2$, identical or different, are methyl, ethyl, n-propyl, isopropyl, n-butyl, tert-butyl, n-pentyl, and/or phenyl.

**4.** The diorganylphosphinic salt of the formula (I) as claimed in one or more of claims 1 to 3, wherein the diorganylphosphinic salts of the formula (I) comprise those from the group of aluminum trisdiethylphosphinate, aluminum trismethylethylphosphinate, aluminum trisdiphenylphosphinate, zinc bisdiethylphosphinate, zinc bismethylethylphosphinate, zinc bisdiphenylphosphinate, titanyl bisdiethylphosphinate, titanium tetrakisdiethylphosphinate, titanyl bismethylethylphosphinate, titanium tetrakismethylethylphosphinate, titanyl bisdiphenylphosphinate, titanium tetrakisdiphenylphosphinate and any desired mixture thereof.

**5.** The diorganylphosphinic salt of the formula (I) as claimed in one or more of claims 1 to 4, whose residual moisture level is from 0.01 to 10% by weight, whose particle size is from 0.1 to 1000 μm and whose bulk density is from 80 to 800 g/l.

**6.** A process for preparation of diorganylphosphinic salts of the formula (I) as claimed in one or more of claims 1 to 5, which comprises reacting the diorganylphosphinic acid

a) with a free base, or
b) with the elemental metal of the desired cation, or

c) in its alkali metal salt form, with a salt of the desired cation, or

d) in the form of a reactive derivative, with a derivative of the desired cation for from 0.01 to 1 hours at from 0 to 300°C.

**7.** The process as claimed in claim 6, wherein the free base comprises nitrogen bases, such as ammonia, primary, secondary, tertiary, and quaternary amines; melamine, urea, guanidine, alkylguanidine, arylguanidine, diphenylguanidine, biguanide, biuret, allantoin, acetoguanamine, benzoguanamine, tolyltriazole, benzotriazole, 2-amino-4-methylpyrimidine, benzylurea, ethylenedimelamine, acetyleneurea, hydantoin, malonamide amidine, dimethylurea, 5,5-diphenylhydantoin, N,N'-diphenylurea, ethylenebis-5-triazone, glycine anhydride, tetramethylurea, triethanolamine and/or condensates of melamine.

**8.** The process as claimed in claim 6, wherein the free base comprises an oxide, mixed metal oxide hydroxide, hydroxide, carbonate, hydroxide carbonate, and/or hydrogencarbonate of the desired cation.

**9.** The process as claimed in one or more of claims 6 to 8, wherein the desired cations are Mg, Ca, Al, Sb, Sn, Ge, Ti, Fe, Zr, Zn, Ce, Bi, Sr, Mn, Li, Na, and/or K.

**10.** The process as claimed in one or more of claims 6 to 9, wherein the salt of the desired cation comprises fluorides, chlorides, bromides, iodides, hypohalites, halites, halates, iodate, perhalates, perchlorate, oxides, hydroxides, peroxides, superoxides; sulfates, hydrogensulfates, sulfate hydrates, sulfites, peroxosulfates; nitrides, phosphides; nitrate, nitrate hydrates, nitrites, phosphates, peroxophosphates, phosphites, hypophosphites, pyrophosphates; carbonates, hydrogencarbonates, hydroxide carbonates, carbonate hydrates, silicates, hexafluorosilicates, hexafluorosilicate hydrates, stannates; borates, polyborates, peroxoborates; thiocyanates, cyanates, cyanides; chromates, chromites, molybdates, permanganate.

**11.** The process as claimed in one or more of claims 6 to 9, wherein the salt of the desired cation comprises compounds having organic anions from the group of the mono-, di-, oligo-, or polycarboxylic acids, such as formates, acetates, acetate hydrates, trifluoroacetate hydrates, propionates, butyrates, valerates, caprylates, oleates, stearates, oxalates, tartrates, citrates, basic citrates, citrate hydrates, benzoates, salicylates, lactate, lactate hydrates, acrylic acid, maleic acid, succinic acid, of amino acids (glycine), of acidic hydroxy functions (phenolates), para-phenolsulfonates, para-phenolsulfonate hydrates, acetylacetonate hydrates, tannates, dimethyldithiocarbamates, trifluoromethanesulfonate, alkylsulfonates, aralkylsulfonates.

**12.** The process as claimed in one or more of claims 6 to 11, wherein the reactive derivatives comprise diorganylphosphinic esters, diorganylphosphinic pyroesters and/or diorganylphosphinic chlorides.

**13.** The use of diorganylphosphinic salts as claimed in one or more of claims 1 to 5 as flame retardants or in flame retardant compositions, in particular for polymers, wherein the flame retardant composition comprises from 50 to 99.9% by weight of a diorganylphosphinic salt as claimed in one or more of claims 1 to 5 and from 0.1 to 50% by weight of at least one additive, where the additives derive from the group of melamine phosphate, dimelamine phosphate, pentamelamine triphosphate, trimelamine diphosphate, tetrakismelamine triphosphate, hexakismelamine pentaphosphate, melamine diphosphate, melamine tetraphosphate, melamine pyrophosphate, melamine polyphosphate, melam polyphosphate, melem polyphosphate, and/or melon polyphosphate; from the group of oligomeric esters of tris(hydroxyethyl) isocyanurate with aromatic polycarboxylic acids, benzoguanamine, tris(hydroxyethyl) isocyanurate, allantoin, glycoluril, melamine, melamine cyanurate, urea cyanurate, dicyandiamide, and/or guanidine; from the group of the zinc compounds, such as zinc oxide, zinc hydroxide, zinc oxide hydrate, zinc carbonate, zinc stannate, zinc hydroxystannate, zinc silicate, zinc phosphate, zinc borate, zinc molybdate; from the group of the carbodiimides and/or (poly)isocyanates, e.g. carbonylbiscaprolactam and/or styrene-acrylic polymers.

**14.** The use of diorganylphosphinic salts as claimed in one or more of claims 1 to 5 in or for preparation of flame-retardant polymer molding compositions, wherein the flame-retardant polymer molding composition comprises from 1 to 50% by weight of diorganylphosphinic salts as claimed in at least one of claims 1 to 5, and from 1 to 99% by weight of polymer or a mixture of these.

**15.** The use as claimed in claim 14, wherein the polymers derive from the group of the thermoplastic polymers, such as polyester, polystyrene, or polyamide, and/or of the thermoset polymers.

**16.** The use of the diorganylphosphinic salts as claimed in at least one of claims 1 to 5 in flame-retardant polymer

moldings, flame-retardant polymer films, flame-retardant polymer filaments, or flame-retardant polymer fibers, wherein the flame-retardant polymer moldings, flame-retardant polymer films, flame-retardant polymer filaments, or flame-retardant polymer fibers comprise from 1 to 50% by weight of diorganylphosphinic salts as claimed in one or more of claims 1 to 5, from 1 to 99% by weight of polymer or of a mixture of these, from 0 to 60% by weight of additives, and from 0 to 60% by weight of filler or of reinforcing materials.

**Revendications**

1. Sels de l'acide diorganylphosphinique de formule (I)

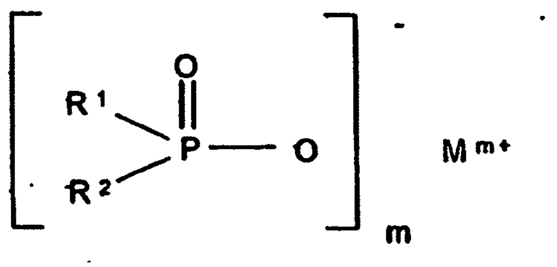

(I)

dans laquelle

$R^1$, $R^2$ sont identiques ou différents et signifient un alkyle en $C_1$-$C_6$, linéaire ou ramifié, et/ou un aryle ;
M signifie Mg, Ca, Al, Sb, Sn, Ge, Ti, Fe, Zr, Zn, Ce, Bi, Sr, Mn, Li,
Na, K et/ou une base azotée protonée ;
m signifie 1 à 4 ; x signifie 1 à 4,

**caractérisés en ce que** la teneur totale en composés ionisables partiellement solubles dans l'eau et la teneur soluble dans l'eau des composés ionisables partiellement solubles dans l'eau est de 8 200 à 100 ppm, et **en ce que** les composés ionisables partiellement solubles dans l'eau sont des composés qui dérivent d'acétates, de chlorures, de nitrates, de sulfates, de phosphites ou de phosphates, et **en ce que** la teneur totale en nitrate (composé ionisable partiellement soluble dans l'eau) est de 2 100 à 100 ppm, et la teneur en nitrate soluble dans l'eau (teneur soluble dans l'eau du composé ionisable partiellement soluble dans l'eau) est de 1 100 à 10 ppm.

2. Sels de l'acide diorganylphosphinique de formule (I) selon la revendication 1, **caractérisés en ce que** M signifie aluminium, calcium, titane, zinc, étain ou zirconium.

3. Sels de l'acide diorganylphosphinique de formule (I) selon la revendication 1 ou 2, **caractérisés en ce que** $R^1$, $R^2$ sont identiques ou différents et signifient méthyle, éthyle, n-propyle, iso-propyle, n-butyle, tert.-butyle, n-pentyle et/ou phényle.

4. Sels de l'acide diorganylphosphinique de formule (I) selon une ou plusieurs des revendications 1 à 3, **caractérisés en ce que** les sels de l'acide diorganylphosphinique de formule (I) sont des sels du groupe constitué par le phosphinate de tridiéthyle aluminium, le phosphinate de triméthyléthyle aluminium, le phosphinate de trisdiphényle aluminium, le phosphinate de bisdiéthyle zinc, le phosphinate de bisméthyléthyle zinc, le phosphinate de bisdiphényle zinc, le phosphinate de bisdiéthyle titanyle, le phosphinate de tétrakisdiéthyle titane, le phosphinate de bisméthyléthyle titanyle, le phosphinate de tétrakisméthyléthyle titane, le phosphinate de bisdiphényle titanyle, le phosphinate de tétrakisdiphényle titane et leurs mélanges quelconques.

5. Sels de l'acide diorganylphosphinique de formule (I) selon une ou plusieurs des revendications 1 à 4, **caractérisés en ce que** leur humidité résiduelle est de 0,01 à 10 % en poids, leur taille de particule est de 0,1 à 1 000 μm et leur densité apparente est de 80 à 800 g/l.

6. Procédé de fabrication de sels de l'acide diorganylphosphinique de formule (I) selon une ou plusieurs des revendications 1 à 5, **caractérisé en ce que** l'acide diorganylphosphinique est mis en réaction

a) avec une base libre ou
b) avec le métal élémentaire du cation souhaité ou
c) sous sa forme de sel de métal alcalin avec un sel du cation souhaité ou
d) sous la forme d'un dérivé réactif avec un dérivé du cation souhaité pendant 0,01 à 1 heure à une température de 0 à 300 °C.

**7.** Procédé selon la revendication 6, **caractérisé en ce que** la base libre correspond à des bases azotées, telles que l'ammonium, les amines primaires, secondaires, tertiaires et quaternaires ; la mélamine, l'urée, la guanidine, l'alkylguanidine, l'arylguanidine, la diphénylguanidine, le biguanide, le biuret, l'allantoïne, l'acétoguanamine, la benzoguanamine, le tolyltriazole, le benzotriazole, la 2-amino-4-méthylpyrimidine, la benzylurée, l'éthylène-dimélamine, l'acétylène-urée, l'hydantoïne, l'amide-amidine de l'acide malonique, la diméthylurée, la 5,5-diphénylhydantoïne, la N,N'-diphénylurée, l'éthylène-bis-5-triazone, l'anhydride de glycine, la tétraméthylurée, la triéthanolamine et/ou les produits de condensation de la mélamine.

**8.** Procédé selon la revendication 6, **caractérisé en ce que** la base libre est un oxyde, un oxyhydroxyde métallique mixte, un hydroxyde, un carbonate, un hydroxycarbonate et/ou un hydrogénocarbonate du cation souhaité.

**9.** Procédé selon une ou plusieurs des revendications 6 à 8, **caractérisé en ce que** les cations souhaités sont Mg, Ca, Al, Sb, Sn, Ge, Ti, Fe, Zr, Zn, Ce, Bi, Sr, Mn, Li, Na et/ou K.

**10.** Procédé selon une ou plusieurs des revendications 6 à 9, **caractérisé en ce que** le sel du cation souhaité correspond à des fluorures, chlorures, bromures, iodures, hypohalogénites, halogénites, halogénates, iodate, perhalogénates, perchlorate, oxydes, hydroxydes, peroxydes, superoxydes ; sulfates, hydrogénosulfates, hydrates de sulfate, sulfites, peroxosulfates ; nitrures, phosphures ; nitrate, hydrates de nitrate, nitrites, phosphates, peroxophosphates, phosphites, hypophosphites, pyrophosphates ; carbonates, hydrogénocarbonates, hydroxycarbonates, hydrates de carbonate, silicates, hexafluorosilicates, hydrates d'hexafluorosilicate, stannates ; borates, polyborates, peroxoborates ; thiocyanates, cyanates, cyanures ; chromates, chromites, molybdates, permanganate.

**11.** Procédé selon une ou plusieurs des revendications 6 à 9, **caractérisé en ce que** le sel du cation souhaité correspond à des composés avec des anions organiques du groupe des acides mono-, di-, oligo-, polycarboxyliques, tels que les formiates, acétates, hydrates d'acétate, hydrates de trifluoroacétate, propionates, butyrates, valérates, caprylates, oléates, stéarates, oxalates, tartrates, citrates, citrates basiques, hydrates de citrate, benzoates, salicylates, lactate, hydrates de lactate, acide acrylique, acide maléique, acide succinique, d'acides aminés (glycine), de fonctions hydroxo acides (phénolates), sulfonates de para-phénol, hydrates de sulfonate de para-phénol, hydrates d'acétylacétonate, tannates, dithiocarbamates de diméthyle, sulfonate de trifluorométhane, sulfonates d'alkyle, sulfonates d'aralkyle.

**12.** Procédé selon une ou plusieurs des revendications 6 à 11, **caractérisé en ce que** les dérivés réactifs sont des esters, pyroesters et/ou chlorures de l'acide diorganylphosphinique.

**13.** Utilisation de sels de l'acide diorganylphosphinique selon une ou plusieurs des revendications 1 à 5 en tant qu'agent ignifuge ou dans des compositions ignifuges, en particulier pour des polymères, **caractérisée en ce que** la composition ignifuge contient 50 à 99,9 % en poids d'un sel de l'acide diorganylphosphinique selon une ou plusieurs des revendications 1 à 5 et 0,1 à 50 % en poids d'au moins un additif, l'additif étant issu du groupe constitué par le phosphate de mélamine, le phosphate de dimélamine, le triphosphate de pentamélamine, le diphosphate de trimélamine, le triphosphate de tétrakismélamine, le pentaphosphate d'hexakismélamine, le diphosphate de mélamine, le tétraphosphate de mélamine, le pyrophosphate de mélamine, le polyphosphate de mélamine, le polyphosphate de mélame, le polyphosphate de mélème et/ou le polyphosphate de mélone ; du groupe constitué par les esters oligomères d'isocyanurate de tris(hydroxyéthyle) avec des acides polycarboxyliques aromatiques, la benzoguanamine, l'isocyanurate de tris(hydroxyéthyle), l'allantoïne, le glycourile, la mélamine, le cyanurate de mélamine, le cyanurate d'urée, le dicyandiamide et/ou la guanidine ; du groupe des composés de zinc tels que l'oxyde de zinc, l'hydroxyde de zinc, l'oxyhydrate d'étain, le carbonate de zinc, le stannate de zinc, l'hydroxystannate de zinc, le silicate de zinc, le phosphate de zinc, le borate de zinc, le molybdate de zinc ; du groupe des carbodiimides et/ou des (poly-)isocyanates, tels que le carbonylbiscaprolactame et/ou les polymères styrène-acrylique.

**14.** Utilisation de sels de l'acide diorganylphosphinique selon une ou plusieurs des revendications 1 à 5 dans ou pour la fabrication de matériaux de moulage polymères ignifugés, **caractérisée en ce que** le matériau de moulage polymère ignifugé contient 1 à 50 % en poids de sels de l'acide diorganylphosphinique selon au moins l'une des

revendications 1 à 5, 1 à 99 % en poids de polymère ou de mélanges de tels polymères.

**15.** Utilisation selon la revendication 14, **caractérisée en ce que** les polymères sont issus du groupe des polymères thermoplastiques tels que le polyester, le polystyrène ou le polyamide et/ou des polymères duroplastiques.

**16.** Utilisation des sels de l'acide diorganylphosphinique selon au moins l'une des revendications 1 à 5 dans des corps moulés, films, fils et fibres polymères ignifugés, **caractérisée en ce que** les corps moulés, films, fils et fibres polymères ignifugés contiennent 1 à 50 % en poids de sels de l'acide diorganylphosphinique selon une ou plusieurs des revendications 1 à 5, 1 à 99 % en poids d'un polymère ou ses mélanges, 0 à 60 % en poids d'additifs et 0 à 60 % en poids d'une charge ou de matériaux de renforcement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3197436 A
- US 3255125 A
- US 3415762 A
- DE 19616025 A
- DE 19910232 A
- DE 19851729 A
- WO 9928327 A
- DE 2827867 A
- DE 19933901 A
- DE 19614424 A
- DE 19734437 A
- WO 9616948 A
- WO 9845364 A
- WO 9808898 A
- EP 1024167 A
- DE 19920276 A
- DE 19851618